(19) Europäisches Patentamt
European Patent Office
Office européen des brevets

(11) EP 2 416 341 B1

(12) # EUROPEAN PATENT SPECIFICATION

(45) Date of publication and mention of the grant of the patent:
**31.12.2014 Bulletin 2015/01**

(21) Application number: **10758356.9**

(22) Date of filing: **03.03.2010**

(51) Int Cl.:
***H01J 11/36*** $^{(2012.01)}$
***H01J 11/10*** $^{(2012.01)}$
***H01J 9/24*** $^{(2006.01)}$
***H01J 29/86*** $^{(2006.01)}$
***C03C 3/066*** $^{(2006.01)}$

(86) International application number:
**PCT/JP2010/053406**

(87) International publication number:
**WO 2010/113580 (07.10.2010 Gazette 2010/40)**

(54) **FLAT-PANEL DISPLAY MEMBER, AND PASTE FOR THE UPPERMOST LAYER OF PARTITION WALL OF FLAT-PANEL DISPLAY MEMBER**

FLACHBILDSCHIRMANZEIGEELEMENT SOWIE PASTE FÜR DIE OBERSTE SCHICHT EINER TRENNWAND IN DEM FLACHBILDSCHIRMANZEIGEELEMENT

ELÉMENT D'ÉCRAN PLAT ET PÂTE POUR LA COUCHE SUPÉRIEURE DE LA CLOISON DE SÉPARATION DE L'ÉLÉMENT D'ÉCRAN PLAT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.03.2009 JP 2009085783**

(43) Date of publication of application:
**08.02.2012 Bulletin 2012/06**

(73) Proprietor: **Toray Industries, Inc.**
**Tokyo 103-8666 (JP)**

(72) Inventors:
- **TANINO, Takahiro**
**Otsu-shi**
**Shiga 520-8558 (JP)**
- **YOKOYAMA, Ryo**
**Otsu-shi**
**Shiga 520-8558 (JP)**

(74) Representative: **Webster, Jeremy Mark et al**
**Mewburn Ellis LLP**
**33 Gutter Lane**
**London**
**EC2V 8AS (GB)**

(56) References cited:
**EP-A1- 0 935 275**
**JP-A- 10 134 723**
**JP-A- 2004 158 345**
**JP-A- 2007 001 846**
**JP-A- 2007 001 846**
**JP-A- 2008 214 144**
**JP-A- 2009 040 676**
**US-A1- 2007 159 056**
**US-A1- 2009 004 366**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 416 341 B1

## Description

### TECHNICAL FIELD

The present invention relates to a flat-panel display member of a plasma display, a field emission display, a fluorescent display tube and the like.

### BACKGROUND ART

Recently, the development of planar displays such as a plasma display, a field emission display, a fluorescent display tube, a liquid crystal display device, an organic electroluminescence display and a light emitting diode display has intensively been made. Among these displays, the plasma display is a display capable of displaying by allowing plasma discharge to occur between an anode electrode and a cathode electrode facing each other in a discharge space disposed between a front glass substrate and a rear glass substrate, and irradiating a phosphor provided in the discharge space with ultraviolet rays generated from a gas sealed in the discharge space to emit light. The field emission display is a display capable of displaying by irradiating a phosphor with electrons emitted by field emission.

The gas discharge type display such as a plasma display or a fluorescent display tube requires an insulating barrier rib to partition a discharge space. Also, the field emission display requires an insulating barrier rib to separate a gate electrode from a cathode.

It has been reported that the field emission display, particularly a surface-conduction electron-emitter display can suppress color mixture of light emission by providing a barrier rib on a face plate side.

In order to achieve higher definition of the display, it is required for a profile of a barrier ribs for these displays to have both small bottom line width and top line width. However, since the strength of the barrier rib decreases with the decrease of the width, destruction such as chipping occurs in the barrier rib in the production process (such as a process of coating a phosphor between barrier ribs or a process of sealing a front substrate and a rear substrate) in which impact is applied to the barrier rib, or when the barrier rib collides with opposing substrates in the case of applying impact to a panel after completion, and thus non-lighting defect caused by the destruction and abnormal lighting defect such as color mixture occur. Accordingly, it was an important problem to reconcile width reduction and higher strength of the barrier rib. To cope with this problem, there has hitherto been reported that formation of a layer having a large porosity on only the uppermost layer of the barrier rib enables absorption of applied impact on the layer having a large porosity, thus suppressing large-scale destruction (for example, Patent Document 1). However, this method exerts insufficient effect of suppressing non-lighting defect caused by the destruction of barrier rib. There was also a problem that since the porosity of the barrier rib increases according to this method, a phosphor penetrates into the pore of the barrier rib during coating and thus color mixture of light emission occurs, resulting in abnormal lighting.

Patent Document 1: JPA No. 2006-012436. JPA 2007-001846 concerns a lead-free glass composition suitable for a white dilectric overcoat layer which contains about 1-10% $ZrO_2$. US 2009/0004366A concerns a process for producing an electrode formed on a glass substrate.

### Problems to be solved by the Invention

Thus, an object of the present invention is to provide a flat-panel display member wherein the destruction of the barrier rib, which may cause non-lighting or abnormal lighting of discharge cells, has been suppressed.

### Means for Solving the Problems

In order to achieve the above object, the present invention has the following constitution. In other words, the present invention is accomplished by a flat-panel display member comprising a barrier rib on a glass substrate, wherein the barrier rib contains a low softening point glass as a main component, the barrier rib is composed of at least two layers, and also a low softening point glass, which is a main component of the uppermost layer of the barrier rib, has an elastic modulus of 80 GPa or less, according to claim 1.

### EFFECT OF THE INVENTION

According the present invention, it is possible to provide a flat-panel display member wherein the destruction of the barrier rib, which may cause non-lighting or abnormal lighting of discharge cells, has been suppressed.

MODE FOR CARRYING OUT THE INVENTION

The present inventors have intensively studied about a flat-panel display member capable of suppressing the destruction of a barrier rib and clarified that the suppression of the destruction of a barrier rib can be achieved by a flat-panel display member having a structure described below. Description will be made below by way of an AC type plasma display as an example of a flat panel display, but the present invention is not limited thereto and is also applicable to other flat panel displays.

It is indispensable that the barrier rib formed in the flat-panel display member of the present invention is composed of at least two layers, and also contains, as a main component, a low softening point glass having an elastic modulus of 80 GPa or less in the uppermost layer of the barrier rib. With the constitution of the barrier rib composed of two or more layers, extension of chipping is easily stopped at an interface between layers even when chipping occurs from the uppermost layer of barrier rib as the origin. Therefore, the present invention exerts noticeable effect of suppressing chipping with a large fracture area (hereinafter referred to large area chipping) which leads to non-lighting, abnormal lighting and the like.

In the present invention, the main component means a component whose volume fraction is the largest, among the entire solid component. In the uppermost layer of the barrier rib, the solid component preferably accounts for 50% by volume or more of the low softening point glass. It is not preferred that the content is less than 50% by volume, since the destruction suppressing effect cannot be sufficiently obtained. The content of the low softening point glass can be determined by observing a cross section of the barrier rib using an electron microscope, and image analyzing the proportion of a cross-sectional area of the low softening point glass in the total cross-sectional area of the solid component. It is possible to distinguish the low softening point glass from the other solid component by a difference in light and shade of the image. It is also possible to strictly distinguish the component by mapping an atom using a technique such as a scanning electron microscope equipped with an energy dispersive X-ray fluorescence spectrometer (SEM-EDX).

In the present invention, the low softening point glass means glass having a softening point within a range from 450 to 650°C. The softening point is within the above range since meltability upon sintering becomes appropriate in the production process of a flat-panel display member. The softening point is more preferably within a range from 500 to 630°C. The softening point of glass can be measured by differential scanning calorimetry using a glass powder

In the present invention, it is indispensable that the uppermost layer of the barrier rib contains, as a main component, a low softening point glass having a small elastic modulus, specifically a low softening point glass having an elastic modulus of 80 GPa or less. The elastic modulus is particularly preferably within a range of 75 GPa or less. When a layer containing, as a main component, a low softening point glass having a small elastic modulus is provided on the uppermost layer of the barrier rib, the uppermost layer of the barrier rib easily undergoes elastic deformation in case impact is applied to the barrier rib, and thus impact is absorbed and the occurrence of the destruction of the barrier rib is suppressed. The elastic modulus of the glass, for example, a glass plate having a thickness of 10 to 20 mm can be determined by an ultrasonic wave pulse method described in JIS-R1602 (1995). The low softening point glass is generally glass having an elastic modulus of more than 80 GPa, and glass having an elastic modulus of 80 GPa or less can also produced, like glass described in the present invention. There is no particular limitation on the lower limit of the elastic modulus, and glass having an elastic modulus of 50 GPa or more can be produced.

In the present invention, a porosity of the uppermost layer of the barrier rib is preferably 3% or less. Herein, the barrier rib is composed of an inorganic component of glass or a filler which does not undergo softening at a firing temperature, and pores, and the proportion of pores in the barrier rib is defined as a porosity. A porosity (P) can be calculated as follows:

$$P = 100 \times (d_{th} - d_{ex})/d_{th}$$

where $d_{th}$ denotes a true density of the material of a barrier rib, and $d_{ex}$ denotes a measured density (bulk density) of a barrier rib. It is preferred to measure the porosity by electron microscopic observation since it is simple. When the porosity is determined by electron microscopic observation, a cross section of the barrier rib is observed by an electron microscopy and the porosity is calculated from the proportion of a pore area in the entire area of pores and the inorganic component. It is not preferred that the porosity is more than 3% since the total number of chippings generated when impact is applied to the barrier rib is likely to increase, and chippings partially become large area chippings which lead to non-lighting, abnormal lighting and the like. In the present invention, large area chipping means that the area of a cross-section formed by chipping of the barrier rib is 2,000 $\mu m^2$ or more. The area of the cross section can be measured by taking a photograph of the destruction portion of the barrier rib using an optical microscope or an electron microscope, and image analyzing the photograph.

In the present invention, it is preferred that the composition of a low softening point glass, which is a main

component of the uppermost layer of the barrier rib, is different from the composition of a low softening point glass, which is a main component of at least one layer other than the uppermost layer. When the composition of a low softening point glass, which is a main component of the uppermost layer, is different from the composition of a low softening point glass, which is a main component of at least one layer other than the uppermost layer, more remarkable extension suppressing effect of barrier rib chipping at the interface is exerted, and thus suppressing large area chipping which leads to non-lighting, abnormal lighting and the like.

In the present invention, it is preferred that an elastic modulus of a low softening point glass, which is a main component of the uppermost layer of the barrier rib, is smaller than an elastic modulus of a low softening point glass, which is a main component of at least one layer other than the uppermost layer. When the elastic modulus of a low softening point glass is different, more remarkable extension suppressing effect of barrier rib chipping at the interface is exerted, and thus suppressing large area chipping which leads to non-lighting, abnormal lighting and the like. Specifically, it is preferred that the following inequality expression is established:

$$E_l - E_u \geq 5 \text{ GPa}$$

where $E_u$ denotes an elastic modulus of a low softening point glass which is a main component of the uppermost layer of the barrier rib, and $E_l$ denotes an elastic modulus of a low softening point glass which is a main component of at least one layer other than the uppermost layer. When $E_l$ > 80 GPa, more remarkable extension suppressing effect of barrier rib chipping is exerted. Particularly preferably, $E_l$ > 85 GPa.

In the present invention, the thickness of the uppermost layer of the barrier rib is preferably from 3 to 40 μm. It is not preferred that the thickness of the uppermost layer of barrier rib is less than 3 μm since an impact absorption effect by the uppermost layer of barrier rib is not sufficiently obtained and thus the destruction of barrier rib is likely to occur. It is not preferred that the thickness of the uppermost layer is more than 40 μm since the distance to the interface between layers increases and thus large destruction of the barrier rib is likely to occur.

In the present invention, it is preferred to use, as the low softening point glass having a small elastic modulus, glass with the following composition of:

$SiO_2$: 10 to 35% by weight,
$B_2O_3$: 35 to 55% by weight,
ZnO: 5 to 20% by weight,
$Li_2O$: 3 to 10% by weight, and
$Al_2O_3$: 10 to 25% by weight.

$SiO_2$ is a material which forms a glass skeleton and is preferably mixed in the proportion of 10% by weight or more since stability of glass deteriorates in case of low content. Since a softening point of glass becomes too high in case of high content, it is preferred to mix in the proportion within a range of 35% by weight or less.

Since $B_2O_3$ lowers an elastic modulus and also lowers a softening point, the content is preferably 35% by weight or more, and more preferably 40% by weight or more. It is possible to maintain chemical stability by adjusting the content to 55% by weight, and more preferably 50% by weight or less.

Since ZnO has the effect of lowering an elastic modulus, the content is preferably 5% by weight or more. Since stability and insulating properties of glass deteriorate when the content increases, it is preferred to mix in the proportion within a range of 20% by weight or less.

Since $Li_2O$ has the effect of lowering a softening point of glass, it is preferred to mix in the proportion of 3% by weight or more. Since an elastic modulus of glass increases and also chemical stability deteriorates when the content increases, it is preferred to mix in the proportion within a range of 10% by weight or less, and more preferably 7% by weight or less.

Since $Al_2O_3$ has the effect of widening a vitrification range to stabilize glass and is also effective to improve chemical stability of glass, it is preferred to mix in the proportion of 10% by weight or more, and more preferably 12% by weight or more. Since an elastic modulus increases when the content increases, it is preferred to adjust the content to 25% by weight or less.

In addition, there may be mixed alkali earth metal oxides such as MgO, CaO, SrO and BaO which are effective to lower a softening point of glass. Since an elastic modulus of glass tends to increase by mixing these components, it is preferred to adjust the total content to 10% by weight or less. Particularly preferably, the total content is 5% by weight or less.

Glass containing five components of $SiO_2$, $B_2O_3$, ZnO, $Li_2O$ and $Al_2O_3$ in the total proportion of 90% by weight or more has a low softening point and a low elastic modulus and is also excellent in glass stability and chemical durability,

and is therefore used as glass which forms the uppermost layer of the barrier rib of the present invention. Particularly, since $SiO_2$, $B_2O_3$ and ZnO are components which lower an elastic modulus, the total amount of these three kinds is preferably 60% by weight or more.

It may contain, as other components, $Na_2O$, $K_2O$, $ZrO_2$, $TiO_2$, $Bi_2O_3$, $PbO_2$ and the like.

The composition of the low softening point glass contained in the barrier rib can be quantitatively determined by selectively scraping the low softening point glass from the barrier rib, and performing inductively coupled plasma (ICP) emission spectroscopic analysis. It is also possible to secondarily use other known analytical means such as SEM-EDX.

In the present invention, it is preferred that the low softening point glass used as a main component of the uppermost layer of the barrier rib has a small thermal expansion coefficient. Particularly, it is preferred that a low softening point glass used in the layer other than the uppermost layer of the barrier rib or a low softening point glass having a smaller thermal expansion coefficient than that of the substrate is used in the uppermost layer of the barrier rib since compressive stress is applied to the uppermost layer of the barrier rib in the cooling process after firing, and thus the strength of the uppermost layer of barrier rib increases. Specifically, it is preferred that the uppermost layer of barrier rib contains, as a main component, a low softening point glass having a linear thermal expansion coefficient of 40 to 80 x $10^{-7}$ $K^{-1}$ at a temperature within a range from 50 to 400°C. More preferably, the linear thermal expansion coefficient is from 40 to 70 $\times$ $10^{-7}$ $K^{-1}$.

In the present invention, it is possible to use, as the low softening point glass used in the barrier rib layer other than the uppermost layer, a low softening point glass with a conventionally known composition.

The flat-panel display member of the present invention can be produced by forming a barrier rib using known pattern forming methods, for example, a photosensitive paste method, a screen printing method, a sandblasting method, a chemical etching method and the like.

The paste, not being part of the invention, for the uppermost layer of a barrier rib of a flat-panel display member of the present invention is paste for the uppermost layer of a barrier rib of a flat-panel display member, containing an organic binder component and an inorganic component, wherein a main component in the inorganic component is a low softening point glass having an elastic modulus of 80 GPa or less.

It is possible to use, as the organic binder, a reactive monomer, oligomer, polymer or the like.

It is preferred that the low softening point glass contained in the paste for the uppermost layer of a barrier rib of a flat-panel display member of the present invention has the composition of $SiO_2$: 10 to 35% by weight, $B_2O_3$: 35 to 55% by weight, ZnO: 5 to 20% by weight, $Li_2O$: 3 to 10% by weight, and $Al_2O_3$: 10 to 25% by weight.

The flat-panel display member including the above uppermost layer of a barrier rib can be obtained by using a paste for the uppermost layer of a barrier rib of a flat-panel display member of the present invention, and performing coating, drying and patterning for the uppermost layer of a barrier rib, followed by firing.

It is preferred to contain, as the organic binder component contained in the paste for the uppermost layer of a barrier rib of a flat-panel display member of the present invention, a photosensitive organic component selected from a photosensitive monomer, a photosensitive oligomer and a photosensitive polymer. In this case, the paste for the uppermost layer of a barrier rib of a flat-panel display member of the present invention is a photosensitive paste.

The method for producing a flat-panel display member of the present invention using a photosensitive paste method will be described below, but the pattern forming method used in the present invention is not limited thereto and the other method is also applicable.

The photosensitive paste means a paste in which the irradiated portion becomes insoluble in a developing solution by irradiating a coating film formed after performing coating and drying with active rays, and then a pattern can be formed by removing only the non-irradiated portion using the developing solution. Active rays as used herein mean electromagnetic waves having a wavelength within a range from 250 to 1,100 nm, and specific examples thereof include ultraviolet rays of an ultrahigh pressure mercury lamp, a metal halide lamp and the like; visible rays of a halogen lamp or the like; and laser beams having a specific wavelength of a helium-cadmium laser, a helium-neon laser, an argon ion laser, a semiconductor laser, a YAG laser, a carbon dioxide laser and the like.

The photosensitive paste used suitably in the present invention contains, as the inorganic component, a powder of the above low softening point glass. The composition of the powder may be single, or a plurality of powders each having a different composition may be used in the form of a mixture. It is possible to obtain a pattern containing a low softening point glass by firing a photosensitive paste containing a low softening point glass powder at around a softening point of the low softening point glass powder or a temperature higher than the softening point, and removing an organic component such as a photosensitive organic component described hereinafter. At this time, when a low softening point glass powder is contained as a main component in the inorganic component of the paste, a pattern containing a low softening point glass as a main component can be obtained.

In the photosensitive paste method, it is preferred that the low softening point glass powder has a refractive index of 1.50 to 1.65. When light scattering is suppressed by decreasing a difference in a refractive index between the inorganic component and the organic component using such a low softening point glass powder, patterning with high

accuracy is facilitated. The particle diameter of the low softening point glass powder is selected taking a shape of a pattern to be formed into consideration. It is preferred that a 50% particle diameter $d_{50}$ (average particle diameter) in a weight distribution curve measured by a particle size distribution analyzer (for example, "MT3300" manufactured by Nikkiso Co., Ltd.) is from 0.1 to 4.0 μm, and a maximum particle diameter $d_{max}$ (top size) is 20 μm or less.

It is possible to add, as the inorganic component, a filler component other than the above low softening point glass powder to the photosensitive paste used suitably in the present invention. The filler component in the present invention is added so as to improve the strength or firing shrinkage ratio of the pattern, and means inorganic fine particles which do not undergo melt flow even at a firing temperature. The addition of the filler component enables suppression of problems such as pattern collapse due to flow upon firing of a pattern, and peeling due to shrinkage, and an increase in the strength of the pattern. It is possible to preferably use, as the filler component, a filler component having an average particle diameter ($d_{50}$) of 1 to 4 μm and an average refractive index of 1.4 to 1.7, taking dispersion or filling into a photosensitive paste, and suppression of light scattering upon exposure into consideration. In the present invention, it is possible to use, as such a filler component, a high softening point glass powder in which a softening point of glass is 650°C or higher, and at least one kind selected from ceramics powders such as cordierite and silica powders. From the viewpoint of ease of the adjustment of the average particle diameter and average refractive index, use of a high softening point glass powder is preferred.

When the high softening point glass powder is used as the filler component, a high softening point glass powder having a softening point of 650 to 1,350°C is preferably added in the proportion within a range of 40% by volume or less based on the entire inorganic fine particles. It is not preferred that the proportion is more than 40% by volume since density of the pattern to be formed is likely to deteriorate. Examples of the high softening point glass powder which can be preferably used include, but are not limited to, those with the composition of sodium oxide; 1% by mass, silicon oxide; 40% by mass, boron oxide; 10% by mass, aluminum oxide; 33% by mass, zinc oxide; 4% by mass, calcium oxide; 9% by mass, and titanium oxide; 3% by mass.

The total amount of the above inorganic component contained in the solid component of the photosensitive paste is preferably from 35 to 70% by volume, and more preferably from 40 to 65% by volume. Herein, the solid component means an inorganic component contained in the paste, and an organic component excluding the solvent. It is not preferred that the content of the inorganic component is less than 35% by volume since shrinkage of the pattern due to firing increases and thus the shape is likely to become poor. Also, it is not preferred that the content of the inorganic component is more than 70% by volume since the crosslinking reaction due to exposure becomes insufficient and thus it becomes difficult to form a pattern. It is possible to control a volume ratio of the low softening point glass to the filler component of the barrier rib formed using the photosensitive paste by a volume ratio of the low softening point glass powder to the filler component, which are added to the photosensitive paste.

The content (% by volume) of the inorganic component in the solid component can be controlled by the additive amount (% by mass) taking the density of the inorganic component and the organic component upon preparation of the paste into consideration. Examples of the method of analyzing the content of the inorganic component include a method of determining by thermal gravimetric analysis (TGA) and the measurement of the density of the fired film of the inorganic component, and a method of determining by image analysis obtained by transmission electron microscopic observation image of a paste dry film which is obtained by coating and drying the photosensitive paste. When the content is determined by thermal gravimetric analysis and the measurement of the density of the fired film of the inorganic component, for example, a change in weight at a temperature within a range from room temperature to 600°C is evaluated by TGA (for example, "TGA-50", manufactured by Shimadzu Corporation) using about 10 mg of a photosensitive paste as a sample. Since the solvent in the paste is usually vaporized at 100 to 150°C, a mass ratio of the inorganic component to the organic component is determined from a ratio of the weight after heating to 600°C to the weight after vaporization of the solvent (corresponds to the weight of the inorganic component since the organic component is removed). The content can be evaluated when the density of the inorganic component is evaluated based on the thickness, area and mass of the fired film. When the content is determined by transmission electron microscopic observation, a cross section perpendicular to a surface of a paste dry film may be observed by a transmission electron microscope (for example, "JEM-4000EX", manufactured by JEOL, Ltd.), followed by distinguishing the inorganic component from the organic component through light and shade of the image and further image analysis. With respect to the area to be evaluated by a transmission electron microscope, for example, the area measuring about 20 μm × 100 μm as the subject may be observed at a magnification of about 1,000 to 3,000 times.

The photosensitive paste used suitably in the present invention is constituted by optionally mixing a photosensitive organic component such as a photosensitive monomer, a photosensitive oligomer or a photosensitive polymer, a non-photosensitive polymer component and an additive component such as an antioxidant, a photopolymerization initiator, a plasticizer, a thickener, a dispersing agent, an organic solvent or a suspending agent.

It is possible to preferably use, as the photosensitive polymer, an alkali-soluble polymer for the following reason. That is, an aqueous alkali solution can be used, as a developing solution, in place of an organic solvent having a problem with the environment since the polymer has alkali solubility. It is possible to preferably use, as the alkali-soluble polymer,

an acrylic copolymer. The acrylic copolymer is a copolymer containing at least one kind of an acrylic monomer in a copolymerization component, and specific examples of the acrylic monomer include acrylic monomers such as methyl acrylate, ethyl acrylate, n-propyl acrylate, isopropyl acrylate, n-butyl acrylate, sec-butyl acrylate, isobutyl acrylate, tert-butyl acrylate, n-pentyl acrylate, allyl acrylate, benzyl acrylate, butoxyethyl acrylate, butoxytriethylene glycol acrylate, cyclohexyl acrylate, dicyclopentanyl acrylate, dicyclopentenyl acrylate, 2-ethylhexyl acrylate, glycerol acrylate, glycidyl acrylate, heptadecafluorodecyl acrylate, 2-hydroxyethyl acrylate, isobornyl acrylate, 2-hydroxypropyl acrylate, isodecyl acrylate, isooctyl acrylate, lauryl acrylate, 2-methoxyethyl acrylate, methoxyethylene glycol acrylate, methoxydiethylene glycol acrylate, octafluoropentyl acrylate, phenoxyethyl acrylate, stearyl acrylate, trifluoroethyl acrylate, acrylamide, aminoethyl acrylate, phenyl acrylate, 1-naphthyl acrylate, 2-naphthyl acrylate, thiophenol acrylate and benzylmercaptan acrylate; and those in which these acrylates are replaced by methacrylates; and the like. A compound having a carbon-carbon double bond can be used as the copolymerization component other than the acrylic monomer. Preferably, styrenes such as styrene, o-methylstyrene, m-methylstyrene, p-methylstyrene, $\alpha$-methylstyrene, chloromethylstyrene and hydroxymethylstyrene, 1-vinyl-2-pyrrolidone and the like can be exemplified.

Alkali solubility is imparted to the acrylic copolymer by adding, as the monomer, an unsaturated acid such as an unsaturated carboxylic acid. Specific examples of the unsaturated acid include acrylic acid, methacrylic acid, itaconic acid, crotonic acid, maleic acid, fumaric acid, vinyl acetate, or acid anhydrides thereof. It is preferred that an acid value of the polymer after the addition of them is within a range from 50 to 150.

In order to increase a reaction rate of a curing reaction by exposure of the acrylic copolymer, an acrylic copolymer having a carbon-carbon double bond at the side chain or molecular end is preferably used. Examples of the group having a carbon-carbon double bond include a vinyl group, an allyl group, an acryl group, a methacryl group and the like. The acrylic copolymer having such a functional group at the side chain or molecular end can be synthesized by reacting a mercapto group, an amino group, a hydroxyl group and a carboxyl group in the acrylic copolymer with a compound having a glycidyl group or an isocyanate group and a carbon-carbon double bond, an acrylic acid chloride, a methacrylic acid chloride or an allyl chloride.

Examples of the compound having a glycidyl group and a carbon-carbon double bond include glycidyl methacrylate, glycidyl acrylate, allyl glycidyl ether, glycidyl ethyl acrylate, crotonyl glycidyl ether, glycidyl crotonate, glycidyl isocrotonate and the like. Examples of the compound having an isocyanate group and a carbon-carbon double bond include acryloyl isocyanate, methacryloyl isocyanate, acryloyl ethyl isocyanate, methacryloyl ethyl isocyanate and the like.

The photosensitive monomer is a compound having a carbon-carbon unsaturated bond, and specific examples thereof include methyl acrylate, ethyl acrylate, n-propyl acrylate, isopropyl acrylate, n-butyl acrylate, sec-butyl acrylate, isobutyl acrylate, tert-butyl acrylate, n-pentyl acrylate, allyl acrylate, benzyl acrylate, butoxyethyl acrylate, butoxytriethylene glycol acrylate, cyclohexyl acrylate, dicyclopentanyl acrylate, dicyclopentenyl acrylate, 2-ethylhexyl acrylate, glycerol acrylate, glycidyl acrylate, heptadecafluorodecyl acrylate, 2-hydroxyethyl acrylate, isobornyl acrylate, 2-hydroxypropyl acrylate, isodecyl acrylate, isooctyl acrylate, lauryl acrylate, 2-methoxyethyl acrylate, methoxyethylene glycol acrylate, methoxydiethylene glycol acrylate, octafluoropentyl acrylate, phenoxyethyl acrylate, stearyl acrylate, trifluoroethyl acrylate, allylated cyclohexyl diacrylate, 1,4-butanediol diacrylate, 1,3-butyleneglycol diacrylate, ethylene glycol diacrylate, diethylene glycol diacrylate, triethylene glycol diacrylate, polyethylene glycol diacrylate, dipentaerythritol hexaacrylate, dipentaerythritol monohydroxy pentaacrylate, ditrimethylolpropane tetraacrylate, glycerol diacrylate, neopentyl glycol diacrylate, propylene glycol diacrylate, polypropylene glycol diacrylate, triglycerol diacrylate, trimethylolpropane triacrylate, tetrapropylene glycol dimethacrylate, acrylamide, aminoethyl acrylate, phenyl acrylate, phenoxyethyl acrylate, benzyl acrylate, 1-naphthyl acrylate, 2-naphthyl acrylate, bisphenol A diacrylate, diacrylate of a bisphenol A-ethylene oxide adduct, diacrylate of a bisphenol A-propylene oxide adduct, thiophenol acrylate, benzylmercaptan acrylate, monomers in which 1 to 5 hydrogen atoms among hydrogen atoms of these aromatic rings are substituted with chlorine or bromine atoms, or styrene, p-methylstyrene, o-methylstyrene, m-methylstyrene, chlorinated styrene, brominated styrene, $\alpha$-methylstyrene, chlorinated $\alpha$-methylstyrene, brominated $\alpha$-methylstyrene, chloromethylstyrene, hydroxymethylstyrene, carboxymethylstyrene, vinylnaphthalene, vinylanthracene, vinylcarbazole, and those in which a part or all of acrylates in the molecule of the above compounds are substituted with methacrylates, $\gamma$-methacryloxypropyltrimethoxysilane, 1-vinyl-2-pyrrolidone, and the like. In the polyfunctional monomer, a group having an unsaturated bond may coexist with an acryl group, a methacryl group, a vinyl group and an allyl group. Two or more kinds of these monomers may be used in combination.

It is preferred that the photosensitive paste used suitably in the present invention further contains an urethane compound for the following reason. That is, when the photosensitive paste contains an urethane compound, flexibility of a paste dry film is improved, thus making it possible to reduce stress upon firing and to effectively suppress defects such as cracking and wire breakage. Also, when the photosensitive paste contains an urethane compound, pyrolytic properties are improved and firing residue is less likely to generate in the firing process. The urethane compound used preferably includes, for example, a compound represented by the following general formula (1).

[Chemical Formula 1]

$$R_1 \leftarrow\!\!(R_4 - R_3)_n\, R_4 - R_2 \qquad (1)$$

In the formula, $R_1$ and $R_2$ each represents those selected from the group consisting of a substituent having an ethylenically unsaturated group, hydrogen, an alkyl group having 1 to 20 carbon atoms, an allyl group, an aralkyl group and a hydroxyaralkyl group, and each may be the same or different. $R_3$ is an alkylene oxide group or an alkylene oxide oligomer, and $R_4$ is an organic group having an urethane bond. n is an integer of 1 to 10. Such an urethane compound is preferably a compound including an ethylene oxide unit. More preferably, the urethane compound is a compound of the general formula (1) in which $R_4$ is an oligomer including an ethylene oxide unit (hereinafter referred to as EO) and a propylene oxide unit and also the content of EO in the oligomer is within a range from 8 to 70% by mass. When the content of EO is 70% by mass or less, flexibility is further improved and firing stress can be reduced, and thus defects can be effectively suppressed. Furthermore, pyrolytic properties are improved and firing residue is less likely to generate in the subsequent firing process. When the content of EO is 8% or more, compatibility with the other organic component is improved.

It is preferred that the urethane compound has a carbon-carbon double bond. When the carbon-carbon double bond of the urethane compound reacts with the carbon-carbon double bond of the other crosslinking agent, thereby introducing into a crosslinked compound, polymerization shrinkage can be further suppressed.

Specific examples of the urethane compound used preferably include, but are not limited to, UA-2235PE (molecular weight of 18,000, EO content of 20%), UA-3238PE (molecular weight of 19,000, EO content of 10%), UA-3348PE (molecular weight of 22,000, EO content of 15%), UA-5348PE (molecular weight of 39,000, EO content of 23%) (which are manufactured by SHIN-NAKAMURA CHEMICAL CO., LTD.) and the like. These compounds may be used in the form of a mixture.

The content of the urethane compound is preferably from 0.1 to 10% by mass of the organic component excluding the solvent. When the content is adjusted to 0.1% by mass or more, flexibility of a paste dry film can be improved and firing shrinkage stress in case of firing the paste dry film can be relieved. When the content is more than 10% by mass, dispersibility of the organic component and the inorganic component deteriorates and also the concentration of the monomer and the photopolymerization initiator relatively decreases, and thus defects are likely to occur.

Furthermore, it may contain, as the organic component, a non-photosensitive polymer component, for example, a cellulose compound such as methyl cellulose or ethyl cellulose, a high molecular weight polyether and the like.

It is also preferred to add an antioxidant. The antioxidant has one or more actions among a radical chain inhibiting action, a triplet scavenging action and a hydroperoxide decomposing action. When the antioxidant is added to the photosensitive paste, the antioxidant scavenges a radical and returns an excited energy state of a photopolymerization initiator to a ground state. Whereby, a unnecessary photoreaction due to scattered light is suppressed and the photoreaction rapidly occur with an exposure amount which makes it impossible to suppress by an antioxidant, and thus it is possible to dissolve in an developing solution and to increase insoluble contrast. Specific examples thereof include, but are not limited to, p-benzoquinone, naphthoquinone, p-xyloquinone, p-toluquinone, 2,6-dichloroquinone, 2,5-diacetoxy-p-benzoquinone, 2,5-dicaproxy-p-benzoquinone, hydroquinone, p-t-butyl catechol, 2,5-dibutylhydroquinone, mono-t-butylhydroquinone, 2,5-di-t-amylhydroquinone, di-t-butyl-p-cresol, hydroquinone monomethyl ether, $\alpha$-naphthol, hydrazine hydrochloride, trimethylbenzylammonium chloride, trimethylbenzylammonium oxalate, phenyl-$\beta$-naphthylamine, parabenzylaminophenol, di-$\beta$-naphthylparaphenylenediamine, dinitrobenzene, trinitrobenzene, picric acid, quinonedioxime, cyclohexanone oxime, pyrogallol, tannic acid, triethylamine hydrochloride, dimethylaniline hydrochloride, cupferron, 2,2'-thiobis(4-t-octylphenolate)-2-ethylhexylaminonickel-(II), 4,4'-thiobis-(3-methyl-6-t-butylphenol), 2,2'-methylenebis-(4-methyl-6-t-butylphenol), triethylene glycol-bis[3-(3-t-butyl-5-methyl-4-hydroxyphenyl) propionate], 1,6-hexanediol-bis[3-(3,5-di-t-butyl-4-hydroxyphenyl) propionate], 1,2,3-trihydroxybenzene and the like. Two or more kinds of these antioxidants can also be used in combination. The amount of the antioxidant to be added in the photosensitive paste is preferably within a range from 0.1 to 30% by mass, and more preferably from 0.5 to 20% by mass. When the additive amount of the antioxidant is adjusted within the above range, it is possible to maintain photosensitivity of the photosensitive paste, and to ensure large contrast between the exposed portion and the non-exposed portion while maintaining the polymerization degree and a pattern shape.

It is possible to preferably use, as the photopolymerization initiator, a photoradical initiator which generates a radical by irradiation with light of an active light source, and specific examples thereof include benzophenone, methyl o-benzoylbenzoate, 4,4-bis(dimethylamino)benzophenone, 4,4-bis(diethylamino)benzophenone, 4,4-dichlorobenzophenone, 4-benzoyl-4-methyl diphenyl ketone, dibenzylketone, fluorenone, 2,2-diethoxyacetophenone, 2,2-dimethoxy-2-phenylacetophenone, 2-hydroxy-2-methylpropiophenone, p-t-butyldichloroacetophenone, thioxanthone, 2-methylthioxanthone, 2-chlorothioxanthone, 2-isopropylthioxanthone, diethylthioxanthone, benzyl, benzylmethoxyethylacetal, benzoin, benzoin methyl ether, benzoin butyl ether, anthraquinone, 2-t-butylanthraquinone, 2-amylanthraquinone, β-chloroanthraquinone, anthron, benzanthron, dibenzosuberon, methyleneanthron, 4-azidebenzalacetophenone, 2,6-bis(p-azidobenzylidene)cyclohexanone, 2,6-bis(p-azidobenzylidene)-4-methylcyclohexanone, 1-phenyl-1,2-butadione-2-(O-methoxycarbonyl) oxime, 1-phenyl-1,2-propanedione-2-(O-ethoxycarbonyl) oxime, 1,3-diphenylpropanetrione-2-(O-ethoxycarbonyl) oxime, 1-phenyl-3-ethoxypropanetrione-2-(O-benzoyl) oxime, Michler ketone, 2-methyl-1-[4-(methylthio)phenyl]-2-morpholino-1-propanone, 2-benzyl-2-dimethylamino-1-(4-morpholinophenyl)-1-butanone, naphthalenesulfonyl chloride, quinolinesulfonyl chloride, N-phenylthioacridone, 4,4-azobisisobutyronitrile, diphenyl disulfide, benzthiazole disulfide, triphenylphosphine, camphorquinone, carbon tetrabromide, tribromophenylsulfone, benzoin peroxide and eosin, a combination of a photoreductive pigment such as methylene blue with a reducing agent such as ascorbic acid or triethanolamine, and the like. Two or more kinds of these photopolymerization initiators may also be used in combination. The photopolymerization initiator is added in the proportion within a range from 0.05 to 20% by mass, and more preferably from 0.1 to 15% by mass, based on the total amount of the photosensitive monomer and the photosensitive polymer. It is not preferred that the amount of the photopolymerization initiator is too small since photosensitivity may become poor. It is not preferred that the amount of the photopolymerization initiator is too large since light absorption becomes too large and light does not reach up to the deep part, resulting insufficient curing of the deep part.

In order to adjust the viscosity upon coating of a substrate with a photosensitive paste according to a coating method, an organic solvent is used. Examples of the organic solvent used in the case of coating include methyl cellosolve, ethyl cellosolve, butyl cellosolve, methyl ethyl ketone, dioxane, acetone, cyclohexanone, cyclopentanone, isobutyl alcohol, isopropyl alcohol, tetrahydrofuran, dimethyl sulfoxide, γ-butyrolactone, bromobenzene, chlorobenzene, dibromobenzene, dichlorobenzene, bromobenzoic acid, chlorobenzoic acid and the like, and an organic solvent mixture containing one or more kind of these organic solvents.

It is preferred to prepare the photosensitive paste used preferably in the present invention by mixing the respective components such as a low softening point glass powder, a filler component, a photosensitive organic component, a non-photosensitive polymer component, an ultraviolet absorber, an antioxidant, a photopolymerization initiator, a dispersing agent and a solvent so as to obtain a predetermined composition, and then homogeneously dispersing these components through regular kneading using a kneader such as a three-roller. It is also preferred that the photosensitive paste after completion of regular kneading is appropriately filtered and degassed.

The flat-panel display member of the present invention can be produced by coating the thus obtained photosensitive paste on a glass substrate, followed by exposure, developing and further firing.

A basic structure of a flat-panel display member will be described below by way of an AC type plasma display as an example.

A plasma display is obtained by sealing a discharge gas in the internal space of a member which is obtained by sealing a front plate and a rear plate with each other so that a phosphor layer formed on the front plate or the rear plate or both of them is in contact with the internal space. In the front plate, transparent electrodes (sustain electrode, scan electrode) for display discharge is formed on the substrate of the display surface side. For discharge, a gap between the sustain electrode and the scan electrode is preferably as narrow as possible. For the purpose of forming a lower resistance electrode, a bus electrode may be formed on the rear side of a transparent electrode. The bus electrode is sometimes opaque since it is made of materials such as Ag or Cr/Cu/Cr. Unlike the transparent electrode, the bus electrode disturbs display of a cell and is therefore preferably provided on the outer peripheral portion of the display surface. In case of an AC type plasma display, transparent dielectric layer is often formed on the upper layer of the electrode and an MgO thin film is often formed as a protective film thereof. On the rear plate, an electrode (address electrode) for address selection of a cell to be displayed is formed. A barrier rib for partitioning the cell and a phosphor layer may be formed on either or both of the front plate and rear plate, and are often formed only on the rear plate. In the plasma display, the front plate and the rear plate are sealed, and a discharge gas such as Xe-Ne or Xe-Ne-He is sealed in the internal space between them.

The method of producing a rear plate will be described below. It is possible to use, as the glass substrate, a soda glass "PP8" (manufactured by Nippon Electric Glass Co., Ltd.) and a heat-resistant glass for a plasma display "PD200" (manufactured by Asahi Glass Co., Ltd.). There is no particular limitation on the size of the glass substrate, a substrate having a thickness of 1 to 5 mm can be used. On the glass substrate, a strip-shaped conductive pattern for an address electrode is formed using metals such as silver, aluminum, chromium and nickel. It is possible to use, as the formation method, a method in which a metal paste containing powders of these metals and an organic binder as main components is pattern-printed by screen printing, and a photosensitive paste method in which a photosensitive metal paste using a photosensitive organic component as an organic binder is coated, and then pattern exposure is performed using a photomask and the unnecessary portion is dissolved and removed in the developing process, followed by heating and firing usually at 350 to 600°C to form an electrode pattern. It is also possible to use an etching method in which chromium and aluminum are vapor-deposited on a glass substrate and a resist is coated, and then the resist

is pattern-exposed and developed and the unnecessary portion is removed by etching.

It is preferred to further provide a dielectric layer on an address electrode. It is possible to improve stability of discharge and to suppress collapse or peeling of a barrier rib formed on the upper layer of a dielectric layer by providing a dielectric layer. Examples of the method of forming the dielectric layer include a method in which a dielectric paste containing an inorganic component such as a low softening point glass powder or a high softening point glass powder, and an organic binder as main components is full-printed or coated by screen printing, slit die coater and the like.

The method of forming a barrier rib using a photolithographic method will be described below. There is no particular limitation on a barrier rib pattern, and a stripe-shaped pattern, a lattice-shaped pattern, a waffle-shaped pattern and the like are preferred. First, a photosensitive paste for a barrier rib is coated on a substrate with a dielectric layer formed thereon. It is possible to use, as the coating method, methods using a bar coater, a roll coater, a slit die coater, a blade coater, screen printing and the like. The coating thickness can be determined taking the height of a desired barrier rib and the shrinkage ratio by firing of a paste into consideration. The coating thickness can be adjusted by the number of coating, mesh of a screen, viscosity of the paste and the like.

The coated photosensitive paste coating for a barrier rib is dried and then subjected to exposure. Exposure is commonly performed through a photomask, as is performed in conventional photolithography. A direct writing method by laser beams or the like without using a photomask may also be used. It is possible to use, as an exposure equipment, a stepper exposure equipment, a proximity exposure equipment and the like. Examples of active rays used in case of exposure include near infrared rays, visible rays, ultraviolet rays and the like. Among these active rays, ultraviolet rays are most preferred. It is possible to used, as the light source, a low-pressure mercury lamp, a high-pressure mercury lamp, an ultrahigh pressure mercury lamp, a halogen lamp, a germicidal lamp and the like. Among these light sources, an ultrahigh pressure mercury lamp is preferred. Exposure conditions vary depending on the coating thickness, and exposure is usually performed for 0.01 to for 30 minutes using an ultrahigh pressure mercury lamp with an output of 1 to 100 $mW/cm^2$.

After exposure, development is performed utilizing a difference in solubility in a developing solution between the exposed portion and the non-exposed portion. Usually, development is performed by a dipping method, a spraying method, a brushing method and the like. It is possible to use, as a developing solution, an organic solvent capable of dissolving an organic component in a photosensitive paste. When a compound having an acidic group such as a carboxyl group exists in the photosensitive paste, development can be performed using an aqueous alkali solution. It is possible to use, as the aqueous alkali solution, sodium hydroxide, sodium carbonate, an aqueous potassium hydroxide solution and the like. It is preferred to use the aqueous organic alkali solution since an alkali component is easily removed upon firing.

A common amine compound can be used as the organic alkali. Specific examples thereof include tetramethylammonium hydroxide, trimethylbenzylammonium hydroxide, monoethanolamine, diethanolamine and the like.

The concentration of the aqueous alkali solution is usually from 0.05 to 5% by mass, and more preferably from 0.1 to 1% by mass. It is not preferred that the concentration of the alkali is too low since the soluble portion is not easily removed. It is not preferred that the concentration of the alkali is too high since peeling or corrosion of the pattern may occur. It is preferred to perform development at the developing temperature of 20 to 50°C from the viewpoint of process control.

In the present invention, it is necessary that the barrier rib is composed of two or more layers. The structure composed of two or more layers can not only three-dimensionally enlarge the constitution range of the shape of the barrier rib, but also suppress extension of barrier rib chipping at the interface, as described above. For example, in case of a two-layered structure, a barrier rib having a double cross structure on different levels can be formed by coating a first layer, exposing in a striped shape, coating a second layer, and exposing in a striped shape in a direction perpendicular to the first layer, followed by developing.

Then, firing is performed by maintaining at a temperature of 520 to 620°C for 10 to 60 minutes in a firing furnace to form a barrier rib.

Then, a phosphor layer is formed using a phosphor paste. The phosphor layer can be formed by a photolithographic method using a photosensitive phosphor paste, a dispenser method, a screen printing method and the like. There is no particular limitation on the thickness of the phosphor layer, and the thickness is preferably from 10 to 30 $\mu m$, and more preferably from 15 to 25 um. There is no particular limitation on a phosphor powder, and the following phosphors are suitable from the viewpoint of emission intensity, chromaticity, color balance, lifetime and the like. In case of a blue color, aluminate phosphor (for example, $BaMgAl_{10}O_{17}$:Eu) obtained by activating divalent europium, and $CaMgSi_2O_6$ are used. In case of a green color, $Zn_2SiO_4$:Mn, $YBO_3$:Tb, $BaMg_2Al_{14}O_{24}$:Eu,Mn, $BaAl_{12}O_{19}$:Mn and $BaMgAl_{14}O_{23}$:Mn are preferable from the viewpoint of panel luminance. $Zn_2SiO_4$:Mn is more preferable. In a red color, similarly, (Y, Gd)$BO_3$:Eu, $Y_2O_3$:Eu, YPVO:Eu and $YVO_4$:Eu are preferable. (Y, Gd)$BO_3$:Eu is more preferable. When the phosphor is formed through the firing process, formation of the phosphor may be performed simultaneously with firing of the above dielectric layer and barrier rib.

The flat-panel display member of the present invention can be suitably used as the above rear plate for a

plasma display. Since the barrier rib can be formed on the front plate in the plasma display, as described above, the flat-panel display member of the present invention can also be suitably used as the front plate.

EXAMPLES

The present invention will be specifically described below by way of examples. However, the present invention is not limited thereto.

The average particle diameter ($d_{50}$) and the maximum particle diameter ($d_{max}$) of the following inorganic powder are values measured using "MT3300" manufactured by Nikkiso Co., Ltd.

A. Photosensitive Paste Material

Low softening point glass powder: A low softening point glass having the composition and physical properties shown in Table 1 was crushed and used as a powder ($d_{50}$: 2 $\mu$m, $d_{max}$: 10 $\mu$m).

[Table 1]

| Type of low melting point glass | | A-1 | A-2 | A-3 | A-4 | A-5 | A-6 | A-7 | A-8 | A-9 | A-10 |
|---|---|---|---|---|---|---|---|---|---|---|---|
| Composition (% by weight) | $SiO_2$ | 23 | 19 | 22 | 30 | 14 | 30 | 21 | 22 | 20 | 17 |
| | $B_2O_3$ | 33 | 45 | 41 | 40 | 49 | 38 | 51 | 37 | 34 | 33 |
| | ZnO | 2 | 14 | 15 | 7 | 15 | 7 | 1 | 2 | 2 | 2 |
| | $Li_2O$ | 7 | 5 | 5 | 6 | 4 | 4 | 9 | 8 | 8 | 7 |
| | $Al_2O_3$ | 20 | 15 | 15 | 17 | 14 | 16 | 13 | 24 | 23 | 27 |
| | $Na_2O$ and $K_2O$ (Total amount) | 0 | 0 | 0 | 0 | 0 | 5 | 1 | 0 | 0 | 0 |
| | MgO, CaO, SrO and BaO (Total amount) | 15 | 2 | 2 | 0 | 4 | 0 | 4 | 7 | 10 | 14 |
| | $ZrO_2$ | 0 | 0 | 0 | 0 | 0 | 0 | 0 | 0 | 3 | 0 |
| Total amount of $SiO_2$, $B_2O_3$ and ZnO (% by weight) | | 58 | 78 | 78 | 77 | 78 | 75 | 73 | 61 | 56 | 52 |
| Total amount of $SiO_2$, $B_2O_3$, ZnO, $Li_2O$ and $Al_2O_3$ (% by weight) | | 85 | 98 | 98 | 100 | 96 | 95 | 95 | 93 | 87 | 86 |
| Softening point (°C) | | 595 | 589 | 593 | 600 | 589 | 591 | 581 | 607 | 602 | 600 |
| Elastic modulus (GPa) | | 88 | 69 | 68 | 64 | 66 | 59 | 75 | 80 | 86 | 84 |
| Linear thermal expansion coefficient ($\times 10^7 K^{-1}$) | | 78 | 65 | 64 | 63 | 62 | 67 | 75 | 71 | 74 | 75 |

In addition, the following raw materials were used.
Photosensitive monomer M-1: trimethylolpropane triacrylate
Photosensitive monomer M-2: tetrapropylene glycol dimethacrylate
Photosensitive polymer: which is obtained by the addition reaction of a carboxyl group of a copolymer composed of methacrylic acid/methyl methacrylate/styrene = 40/40/30 with 0.4 equivalent of glycidyl methacrylate (weight average molecular weight of 43,000, acid value of 100)
Photopolymerization initiator: 2-benzyl-2-dimethylamino-1-(4-morpholinophenyl)-1-butanone (IC369, manufactured by Ciba Specialty Chemicals Inc.)
Antioxidant: 1,6-hexanediol-bis[3-(3,5-di-t-butyl-4-hydroxyphenyl) propionate]
Ultraviolet absorber: Sudan IV (manufactured by TOKYO OHKA KOGYO Co., Ltd.)
Solvent: $\gamma$-butyrolactone
Filler powder: sodium oxide; 1% by mass, silicon oxide; 40% by mass, boron oxide; 10% by mass, aluminum oxide; 33% by mass, zinc oxide; 4% by mass, calcium oxide; 9% by mass, titanium oxide; 3% by mass (softening point: 770°C, $d_{50}$: 2 $\mu$m, $d_{max}$: 10 $\mu$m)

B. Preparation of Photosensitive Paste

After weighing a photosensitive monomer M-1 (10 parts by weight), a photosensitive monomer M-2 (10 parts by weight), a photosensitive polymer (20 parts by weight), a photopolymerization initiator (3 parts by weight), an antioxidant (1 part by weight) and an ultraviolet absorber (0.02 part by weight), a solvent was appropriately added to these components to adjust the viscosity. Then, a low softening point glass powder and a filler powder were added so that the content of an inorganic component in a solid component becomes 48% by volume. This organic and inorganic mixture was kneaded by a three-roller kneader to obtain a photosensitive paste. A photosensitive paste used to form the uppermost layer of a barrier rib was used after kneading and further adjusting to an appropriate viscosity by adding a solvent.

C. Production of Sample Substrate for Evaluation of Barrier Rib Chipping Resistance

Samples for evaluation of barrier rib chipping resistance were produced by the following procedure. On a glass substrate (42 inch) "PD-200" manufactured by Asahi Glass Co., Ltd., an address electrode pattern was formed by a photolithographic method using a photosensitive silver paste. Then, a dielectric layer was formed in the thickness of 20 μm on the glass substrate with an address electrode formed thereon, by a screen printing method. Then, a photosensitive paste for forming the lowermost layer of a barrier rib was coated in a desired thickness on the glass substrate of the rear plate with an address electrode pattern and a dielectric layer formed thereon, by a slit die coater, and dried at 100°C. Subsequently, the process of coating and drying of different photosensitive pastes by a slit die coater was appropriately repeated to form a photosensitive paste coating film having a layer structure of two or more layers. Subsequently, exposure was carried out through an exposure mask. The exposure mask is a chromium mask designed to enable formation of a stripe-shaped barrier rib pattern (pitch of 160 μm, line width of 20 μm) in a plasma display. Each of photosensitive pastes of Examples and Comparative Examples was subjected to ultraviolet exposure with an exposure amount in a range from 100 mJ/cm$^2$ to 500 mJ/cm$^2$ every 5 mJ/cm$^2$, using an ultrahigh pressure mercury lamp having an output of 50 mW/cm$^2$.

Then, development was carried out by spraying an aqueous 0.3 mass% solution of monoethanolamine maintained at 35°C for 300 seconds, using a shower, and the un-photocured space portion was removed by washing with water using a shower spray. Thereafter, firing was carried out by maintaining at 560°C for 30 minutes to form a barrier rib.

D. Evaluation of Barrier Rib Chipping Resistance

Among samples, each differing in exposure amount produced by the above method, a sample (a bottom width of the barrier rib after firing is 55 μm and a top width is 38 μm) was selected and this sample was cut into pieces measuring 5 cm × 13 cm, and then four points of 1 cm square of the center of the surface on which no barrier rib of the substrate is formed, and one point of the center were marked. Then, the glass substrate "PD-200" cut into pieces measuring 5 cm × 13 cm was laid on the surface with the barrier rib formed thereon and placed while facing the rear plate side upward, and a metal ball with a weight of 114 g was dropped twice toward each of the five marked points from the height of 30 cm. Then, the 1 cm square portion of the center of the substrate was cut out and a photograph of the portion of barrier rib chipping was taken by a scanning electron microscope. The area of a cross-sectional surface formed by chipping was measured by image analysis of the photograph, and the total number of barrier rib chippings and the number of large area chippings in which the area of a cross-sectional surface formed by chipping is 2,000 μm$^2$ or more were measured. This evaluation is a model test of the generation of chipping defect when impact is applied to the flat-panel display member, and the number of large area chippings is preferably 20 chippings/cm$^2$ or less.

Evaluation Results

With respect to barrier ribs having structures of Examples 1 to 17 and Comparative Examples 1 to 7, barrier rib chipping resistance was evaluated. The results are shown in Table 2, Table 3 and Table 4. In Tables 2 to 4, the first layer means the uppermost layer. As the number of the layer becomes larger, the position of the layer sequentially becomes lower. The layer with the largest number is the lowermost layer.

[Table 2]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| First layer (Uppermost layer) | Type of low melting point glass | A-2 | A-2 | A-2 | A-2 | A-2 | A-2 | A-3 | A-4 | A-5 | A-6 |
| | Volume ratio of low melting point glass to filler | 90:10 | 80:20 | 70:30 | 90:10 | 90:10 | 90:10 | 90:10 | 90:10 | 90:10 | 90:10 |
| | Porosity (%) | 1 | 2 | 4 | 1 | 1 | 1 | 1 | 1 | 1 | 2 |
| | Thickness ($\mu$m) | 20 | 20 | 20 | 5 | 35 | 50 | 20 | 20 | 20 | 20 |
| Second layer | Type of low melting point glass | A-1 | A-1 | A-1 | A-1 | A-1 | A-1 | A-1 | A-1 | A-1 | A-1 |
| | Volume ratio of low melting point glass to filler | 80:20 | 80:20 | 80:20 | 80:20 | 80:20 | 80:20 | 80:20 | 80:20 | 80:20 | 80:20 |
| | Thickness ($\mu$m) | 100 | 100 | 100 | 115 | 85 | 70 | 100 | 100 | 100 | 100 |
| Third layer | Type of low melting point glass | - | - | - | - | - | - | - | - | - | - |
| | Volume ratio of low melting point glass to filler | - | - | - | - | - | - | - | - | - | - |
| | Thickness ($\mu$m) | None | None | None | None | None | None | None | None | None | None |
| Total number of chippings (chippings/cm$^2$) | | 14 | 25 | 70 | 42 | 22 | 19 | 11 | 26 | 30 | 28 |
| Number of large area chippings (chippings/cm$^2$) | | 0 | 5 | 15 | 10 | 6 | 13 | 2 | 8 | 8 | 9 |

[Table 3]

| | | Example 11 | Example 12 | Example 13 | Example 14 | Example 15 | Example 16 | Example 17 | Comparative Example 1 | Comparative Example 2 | Comparative Example 3 |
|---|---|---|---|---|---|---|---|---|---|---|---|
| First layer (Uppermost layer) | Type of low melting point glass | A-7 | A-8 | A-2 | A-3 | A-2 | A-2 | A-4 | A-1 | A-1 | A-1 |
| | Volume ratio of low melting point glass to filler | 80:20 | 90:10 | 90:10 | 90:10 | 90:10 | 100:0 | 100:0 | 90:10 | 80:20 | 70:30 |
| | Porosity (%) | 1 | 2 | 1 | 1 | 1 | 0 | 1 | 1 | 2 | 5 |
| | Thickness (μm) | 20 | 20 | 20 | 20 | 10 | 20 | 20 | 20 | 20 | 20 |
| Second layer | Type of low melting point glass | A-1 | A-1 | A-2 | A-2 | A-3 | A-1 | A-1 | A-1 | A-1 | A-1 |
| | Volume ratio of low melting point glass to filler | 80:20 | 80:20 | 90:10 | 90:10 | 90:10 | 80:20 | 80:20 | 80:20 | 80:20 | 80:20 |
| | Thickness (μm) | 100 | 100 | 100 | 100 | 10 | 100 | 100 | 100 | 100 | 100 |
| Third layer | Type of low melting point glass | - | - | - | - | A-1 | - | - | - | - | - |
| | Volume ratio of low melting point glass to filler | - | - | - | - | 80:20 | - | - | - | - | - |
| | Thickness (μm) | None | None | None | None | 100 | None | None | None | None | None |
| Total number of chippings (chippings/$cm^2$) | | 54 | 82 | 18 | 15 | 18 | 5 | 7 | 134 | 218 | 383 |

(continued)

| | Example 11 | Example 12 | Example 13 | Example 14 | Example 15 | Example 16 | Example 17 | Comparative Example 1 | Comparative Example 2 | Comparative Example 3 |
|---|---|---|---|---|---|---|---|---|---|---|
| Number of large area chippings (chippings/$cm^2$) | 14 | 20 | 17 | 5 | 1 | 2 | 2 | 105 | 92 | 43 |

[Table 4]

| | | Comparative Example 4 | Comparative Example 5 | Comparative Example 6 | Comparative Example 7 |
|---|---|---|---|---|---|
| First layer (Uppermost layer) | Type of low melting point glass | A-1 | A-9 | A-10 | A-1 |
| | Volume ratio of low melting point glass to filler | 80:20 | 90:10 | 90:10 | 100:0 |
| | Porosity (%) | 2 | 1 | 1 | 0 |
| | Thickness (μm) | 20 | 20 | 20 | 20 |
| Second layer | Type of low melting point glass | A-2 | A-1 | A-1 | A-1 |
| | Volume ratio of low melting point glass to filler | 90:10 | 80:20 | 80:20 | 80:20 |
| | Thickness (μm) | 100 | 100 | 100 | 100 |
| Third layer | Type of low melting point glass | - | - | - | - |
| | Volume ratio of low melting point glass to filler | - | - | - | - |
| | Thickness (μm) | None | None | None | None |
| Total number of chippings (chippings/$cm^2$) | | 177 | 133 | 86 | 119 |
| Number of large area chippings (chippings/$cm^2$) | | 95 | 59 | 28 | 112 |

In any of rear plates satisfying the requirements of Examples 1 to 17 of the present invention, the number of large area chippings was 20 or less. In contrast, in Comparative Example 1 to 7 in which the uppermost layer of the barrier rib contains, as a main component, glass having an elastic modulus of more than 80 GPa, the number of large area chippings was large and there was a problem with the strength.

## Claims

1. A flat-panel display member comprising a barrier rib on a glass substrate, the barrier rib containing a low softening point glass having a softening point within a range from 450 to 650°C as a main component, **characterized in that** the barrier rib is composed of at least two layers, and a low softening point glass having a softening point within a range from 450 to 650°C, which is a main component of the uppermost layer of the barrier rib, has an elastic modulus of 80 GPa or less and contains $SiO_2$, $B_2O_3$, ZnO, $Li_2O$ and $Al_2O_3$, and the total amount of $SiO_2$, $B_2O_3$, ZnO, $Li_2O$ and $Al_2O_3$ is 90% by weight or more among the composition of the low softening point glass which is a main component of the uppermost layer of the barrier rib.

2. The flat-panel display member according to claim 1, wherein the uppermost layer of the barrier rib has a porosity of 3% or less.

3. The flat-panel display member according to claim 1 or 2, wherein the composition of the low softening point glass, which is a main component of the uppermost layer of the barrier rib, is different from the composition of a low softening point glass, which is a main component of at least one layer other than the uppermost layer.

4. The flat-panel display member according to any one of claims 1 to 3, wherein the elastic modulus of the low softening point glass, which is a main component of the uppermost layer of the barrier rib, is smaller than the elastic modulus of a low softening point glass, which is a main component of at least one layer other than the uppermost layer.

5. The flat-panel display member according to any one of claims 1 to 4, wherein the uppermost layer of the barrier rib has a thickness of 3 to 40 μm.

6. The flat-panel display member according to any one of claims 1 to 5, wherein the low softening point glass, which is a main component of the uppermost layer of the barrier rib, has the composition of $SiO_2$: 10 to 35% by weight, $B_2O_3$: 35 to 55% by weight, ZnO: 5 to 20% by weight, $Li_2O$: 3 to 10% by weight, and $Al_2O_3$: 10 to 25% by weight.

7. The flat-panel display member according to any one of claims 1 to 6, wherein the total amount of MgO, CaO, SrO and BaO is 10% by weight or less, among the composition of the low softening point glass, which is a main component of the uppermost layer of the barrier rib.

8. The flat-panel display member according to any one of claims 1 to 7, wherein the total amount of $SiO_2$, $B_2O_3$ and ZnO is 60% by weight or more, among the composition of the low softening point glass, which is a main component of the uppermost layer of the barrier rib.

## Patentansprüche

1. Flachbildschirm-Anzeigeelement, das eine Barrierenrippe auf einem Glassubstrat umfasst, wobei die Barrierenrippe ein Glas mit einem niedrigen Erweichungspunkt mit einem Erweichungspunkt innerhalb eines Bereichs von 450 bis 650 °C als Hauptbestandteil umfasst, **dadurch gekennzeichnet, dass** die Barrierenrippe aus zumindest zwei Schichten besteht und dass ein Glas mit einem niedrigen Erweichungspunkt mit einem Erweichungspunkt innerhalb eines Bereichs von 450 und 650 °C, das ein Hauptbestandteil der obersten Schicht der Barrierenrippe ist, ein Elastizitätsmodul von 80 GPa oder weniger aufweist und $SiO_2$, $B_2O_3$, ZnO, $Li_2O$ und $Al_2O_3$ enthält und dass die Gesamtmenge von $SiO_2$, $B_2O_3$, ZnO, $Li_2O$ und $Al_2O_3$ 90 Gew.-% oder mehr in der Zusammensetzung des Glases mit einem niedrigen Erweichungspunkt, das ein Hauptbestandteil der obersten Schicht der Barrierenrippe ist, beträgt.

2. Flachbildschirm-Anzeigeelement nach Anspruch 1, worin die oberste Schicht der Barrierenrippe eine Porosität von 3 % oder weniger aufweist.

3. Flachbildschirm-Anzeigeelement nach Anspruch 1 oder 2, worin sich die Zusammensetzung des Glases mit einem niedrigen Erweichungspunkt, das ein Hauptbestandteil der obersten Schicht der Barrierenrippe ist, von der Zusammensetzung eines Glases mit einem niedrigen Erweichungspunkt, das ein Hauptbestandteil von zumindest einer Schicht ist, die nicht die oberste Schicht ist, unterscheidet.

4. Flachbildschirm-Anzeigeelement nach einem der Ansprüche 1 bis 3, worin das Elastizitätsmodul des Glases mit einem niedrigen Erweichungspunkt, das ein Hauptbestandteil der obersten Schicht der Barrierenrippe ist, kleiner ist als das Elastizitätsmodul eines Glases mit einem niedrigen Erweichungspunkt, das ein Hauptbestandteil von zumindest einer Schicht ist, die nicht die oberste Schicht ist.

5. Flachbildschirm-Anzeigeelement nach einem der Ansprüche 1 bis 4, worin die oberste Schicht der Barrierenrippe eine Dicke von 3 bis 40 μm aufweist.

6. Flachbildschirm-Anzeigeelement nach einem der Ansprüche 1 bis 5, worin das Glas mit einem niedrigen Erweichungspunkt, das ein Hauptbestandteil der obersten Schicht der Barriererippe ist, die folgende Zusammensetzung aufweist: $SiO_2$: 10 bis 35 Gew.-%, $B_2O_3$: 35 bis 55 Gew.-%, ZnO: 5 bis 20 Gew.-%, $Li_2O$: 3 bis 10 Gew.-% und $Al_2O_3$: 10 bis 25 Gew.-%.

7. Flachbildschirm-Anzeigeelement nach einem der Ansprüche 1 bis 6, worin die Gesamtmenge von MgO, CaO, SrO und BaO in der Zusammensetzung des Glases mit einem niedrigen Erweichungspunkt, das ein Hauptbestandteil der obersten Schicht der Barrierenrippe ist, 10 Gew.-% oder weniger beträgt.

8. Flachbildschirm-Anzeigeelement nach einem der Ansprüche 1 bis 7, worin die Gesamtmenge von $SiO_2$, $B_2O_3$ und ZnO in der Zusammensetzung des Glases mit einem niedrigen Erweichungspunkt, das ein Hauptbestandteil der

obersten Schicht der Barrierenrippe ist, 60 Gew.-% oder mehr beträgt.

## Revendications

1. Élément d'affichage à écran plat comprenant une nervure de barrière sur un substrat en verre, la nervure de barrière contenant un verre à point de ramollissement bas ayant un point de ramollissement dans une plage de 450 à 650 °C en tant que composant principal, **caractérisé en ce que** la nervure de barrière est composée d'au moins deux couches, et un verre à point de ramollissement bas ayant un point de ramollissement dans une plage de 450 à 650°C, qui est un composant principal de la couche supérieure de la nervure de barrière, a un module d'élasticité de 80 GPa ou moins et contient $SiO_2$, $B_2O_3$, ZnO, $Li_2O$ et $Al_2O_3$, et la quantité totale de $SiO_2$, $B_2O_3$, ZnO, $Li_2O$ et $Al_2O_3$ est de 90 % en poids ou plus dans la composition de verre à point de ramollissement bas qui est un composant principal de la couche supérieure de la nervure de barrière.

2. Élément d'affichage à écran plat selon la revendication 1, dans lequel la couche supérieure de la nervure de barrière a une porosité de 3 % ou moins.

3. Élément d'affichage à écran plat selon la revendication 1 ou 2, dans lequel la composition du verre à point de ramollissement bas, qui est un composant principal de la couche supérieure de la nervure de barrière, est différente de la composition d'un verre à point de ramollissement bas, qui est un composant principal d'au moins une couche autre que la couche supérieure.

4. Élément d'affichage à écran plat selon l'une quelconque des revendications 1 à 3, dans lequel le module d'élasticité du verre à point de ramollissement bas, qui est un composant principal de la couche supérieure de la nervure de barrière, est inférieur au module d'élasticité du verre à point de ramollissement bas, qui est un composant principal d'au moins un couche autre que la couche supérieure.

5. Élément d'affichage à écran plat selon l'une quelconque des revendications 1 à 4, dans lequel la couche supérieure de la nervure de barrière a une épaisseur de 3 à 40 $\mu$m.

6. Élément d'affichage à écran plat selon l'une quelconque des revendications 1 à 5, dans lequel le verre à point de ramollissement bas, qui est le composant principal de la couche supérieure de la nervure de barrière, a la composition de $SiO_2$ : 10 à 35 % en poids, $B_2O_3$ :35 à 55 % en poids, ZnO : 5 à 20 % en poids, $Li_2O$ : 3 à 10 % en poids, et $Al_2O_3$ : 10 à 25 % en poids.

7. Élément d'affichage à écran plat selon l'une quelconque des revendications 1 à 6, dans lequel la quantité totale de MgO, CaO, SrO et BaO est de 10 % en poids ou moins, dans la composition du verre à point de ramollissement bas, qui est un composant principal de la couche supérieure de la nervure de barrière.

8. Élément d'affichage à écran plat selon l'une quelconque des revendications 1 à 7, dans lequel la quantité totale de $SiO_2$, $B_2O_3$ et ZnO est 60 % en poids ou plus, dans la composition du verre à point de ramollissement bas, qui est un composant principal de la couche supérieure de la nervure de barrière.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090004366 A